# EUROPÄISCHE PATENTSCHRIFT

(11) **EP 1 266 515 B1**
(45) Veröffentlichungstag und Bekanntmachung des Hinweises auf die Patenterteilung: **21.06.2006**
(21) Anmeldenummer: 01905713.2
(22) Anmeldetag: 31.01.2001
(51) Int. Cl.: H04M 3/493, A63F 13/12

(54) **VERFAHREN ZUM BETRIEB EINES TELEKOMMUNIKATIONSSYSTEMS UND TELEKOMMUNIKATIONSANORDNUNG**
METHOD FOR OPERATING A TELECOMMUNICATION SYSTEM AND TELECOMMUNICATION ARRANGEMENT
PROCEDE D'UTILISATION D'UN SYSTEME DE TELECOMMUNICATION ET DISPOSITIF DE TELECOMMUNICATION

(30) Priorität: 31.01.2000 DE 10004066
(43) Veröffentlichungstag der Anmeldung: 18.12.2002
(73) Patentinhaber: Horst, Peter Michael, 83703 Gmund (DE)
(72) Erfinder: Käter, Rolf-Peter, 85598 Baldham (DE); Esser, Joachim, 80802 München (DE); Müller-Judex, Donald, 82266 Buch am Ammersee (DE); Horst, Peter Michael, 83703 Gmund (DE); Wölfel, Jörg-Ulrich, Dr., 85540 Haar (DE)
(74) Vertreter: Bohnenberger, Johannes
(86) Internationale Anmeldenummer: PCT/EP2001/001009
(87) Internationale Veröffentlichungsnummer: WO 2001/058118

(56) Entgegenhaltungen:
- US-A- 5 738 583
- US-A- 5 942 969
- US-A- 5 999 808

## Beschreibung

Die Erfindung betrifft ein Verfahren zum Betrieb eines Telekommunikationssystems, welches insbesondere ein Mobilfunknetz einschließt, zur Bereitstellung einer Dienstleistung und zur Informationsgewinnung sowie eine Anordnung zur Durchführung dieses Verfahrens.

Die dramatische Entwicklung der Mobilfunktechnik und Mobilfunk-Infrastruktur hat die mobile Kommunikation in den letzten Jahren in den Industrieländern zu einem prägenden Element des täglichen Lebens gemacht. Mobiltelefone haben sich weit über den Bereich der beruflichen Nutzung hinaus zu einem Kommunikationsmittel der gesamten Bevölkerung, von Jugendlichen bis hin zu Rentnern, entwickelt. Der Kreis der Nutzer von Mobiltelefonen ist somit weitgehend repräsentativ für die Bevölkerung in den Industrieländern insgesamt.

Daraus ergibt sich zum einen ein hoher Stellenwert von Informationen über Nutzer von Mobiltelefonen für die Konsumgüterindustrie, den Handel und Dienstleister, aber auch für staatliche und soziale Einrichtungen etc.

Zum anderen besteht bei allen an den Mobilfunksystemen Beteiligten das Bedürfnis, das Mobiltelefon in Anbetracht der relativ hohen Gestehungs- bzw. Anschaffungskosten nicht nur gemäß seinem primären Verwendungszweck als Mittel zur bilateralen Nachrichtenübermittlung im beruflichen und privaten Umfeld des Nutzers einzusetzen, sondern seinen Gebrauchswert durch Mehrwertdienste zu erhöhen. Diesem Ziel dienen in das Mobiltelefon eingebaute Spiele ebenso wie von den Netzbetreibern zur Verfügung gestellte Informationskanäle und Serviceangebote.

Die bereits eingeleitete und in näherer Zukunft eine Fülle neuer Möglichkeiten erschließende Verknüpfung der Mobilfunknetze mit dem Internet - derzeit auf der Basis des WAP (Wireless Application Protocol) unter Nutzung der vereinfachten Datenkommunikationssprache WML (Wireless Markup Language) - wird die Akzeptanz und Nutzung der Mobilfunktechnik einerseits und des Internet andererseits weiter steigern.

Aus der DE 693 09 682 ist eine Hotelkommunikationsanlage mit einem PABX-Koppelnetz bekannt, die in der Lage ist, auf einen von einem Gästezimmer ausgehenden Anruf zu antworten, um automatisch eine von dem Anrufer gewünschte Information oder einen anderen Service zu liefern. Das Betriebsverfahren dieser Telekommunikationsanlage umfaßt die Speicherung einer Mehrzahl von Endgeräte-Rufnummern des Systems und die Erzeugung von Primär- und Sekundärnachrichten (Reaktionsnachrichten) sowie eine Auswertung der - hier von den Endgeräten in den Gästezimmmern ausgehenden - Primärnachrichten. Im Ergebnis der Abarbeitung einer Menüführung wird an das Endgerät, von dem die Primärnachricht ausging, schließlich eine bestimmte Information übermittelt.

In der DE 198 33 218 A1 wird ein Telefonspielsystem beschrieben, bei dem u. a. eine Zählung von Teilnehmern vorgesehen ist. Im Zusammenhang mit der Zählung ist auch eine Identifizierung vorgesehen, um einen Teilnehmer, mit dessen Anruf eine vorgegebene Zahl von Anrufen erreicht wird, als einen Gewinner des Spiels feststellen und benachrichtigen zu können. Auch bei diesem Verfahren gibt es Primär- und in Reaktion auf diese ausgegebene Sekundärnachrichten und eine Auswertung der Primärnachrichten zur Absetzung einer bestimmten Sekundärnachricht (nämlich der Gewinn-Benachrichtung).

Aus der US 4,899,369 ist ein sogenannter Audiotex-Service mit einer Angebotspräsentation in Art eines Rundfunk-Sendersuchlaufes bekannt. Der Benutzer kann durch Drücken bestimmter Tasten auf einer Telefontastatur Memory-Marken setzen und damit bestimmte Informationsangebote abrufen. Auch hier gibt es eine vom Endgerät des Nutzers ausgehende Primärnachricht und eine in Reaktion auf die und unter Auswertung der Primärnachricht erstellte, vom Prozessor des Systems ausgehende Sekundärnachricht.

In der DE 198 19 582 A1 wird die standortabhängige Durchführung von Diensten eines Mobilfunknetzes, speziell die standortabhängige Vergebührung oder die Durchführung von routen-/bereichsbezogenen Aufgaben, gelehrt. In Auswertung einer den aktuellen Standort des Teilnehmers betreffenden Standortinformation wird mit einem die Standortabhängigkeit der angebotenen Dienste beschreibenden Diensteplan ein aktuelles Dienstprofil für den Teilnehmer abgeleitet. Hieraus kann eine an den Teilnehmer zu übermittelnde Nachricht abgeleitet werden.

Die US-A-5 942 969 beschreibt ein Verfahren zum Spielen eines Schatzjägerspiels mittels eines Pager-Systems. Die Mitspieler müssen hierbei Hinweise sammeln und interpretieren und sich entsprechend den Hinweisen an unterschiedliche Lokalitäten begeben. Die Hinweise werden in digitaler Form als Nachrichten über das Pager-System an die Mitspieler weitergegeben. Eine Überprüfung, ob sich ein jeweiliger Mitspieler zur Zeit am richtigen Ort befindet, kann entweder durch inhärente Eigenschaften des Pager-Systems oder über manuelle Angaben des Mitspielers erfolgen.

Ausgehend von diesem Stand der Technik, ist es Aufgabe der vorliegenden Erfindung, ein Verfahren zum Betrieb eines Telekommunikationssystems, welches insbesondere ein Mobilfunknetz einschließt, anzugeben, mit dem in einer sinnreichen und eine Nutzerakzeptanz sichernden Art und Weise Informationen über die Nutzer gesammelt werden. Weiterhin liegt der Erfindung die Aufgabe zu Grunde, eine zur Durchführung dieses Verfahrens geeignete Anordnung anzugeben.

Diese Aufgabe wird hinsichtlich ihres Verfahrensaspektes durch ein Verfahren mit den Merkmalen des Anspruchs 1 und hinsichtlich ihres Vorrichtungsaspektes durch eine Anordnung mit den Merkmalen des Anspruchs 13 gelöst.

Die Erfindung schließt den wesentlichen Gedanken ein, in einem mehrstufigen Ansprech- und Reaktionsablauf Nutzer von Telekommunikations-Endgeräten (insbesondere Mobiltelefonen) mit einem bestimmten, speziell unterhaltungsorientierten Dienstangebot anzusprechen und bei positiver Reaktion zugleich den unterhaltungsorientierten Dienst für den Nutzer über sein Endgerät zu realisieren und dabei bestimmte Informationen zu gewinnen und zu speichern. Diese Informationen umfassen insbesondere die (verifizierte) Nutzer-Rufnummer, den geografischen Aufenthaltsbereich des Nutzers sowie gegebenenfalls Informationen zur Person, zu Freizeitinteressen, Konsum- und Dienstleistungsbedürfnissen etc. Hierfür gibt es, je nach Art der angebotenen Dienstleistung (Unterhaltung) und der in diesem Zusammenhang übermittelten Nachrichten, eine Vielzahl von Möglichkeiten. Der Anbieter des vorgeschlagenen Systems kann daher den Informationsbedarf von Kunden bei geeigneter Verfahrensführung differenziert befriedigen. Darüber hinaus können in die übermittelten Nachrichten auch Werbeaussagen eingebaut werden, die die wirtschaftliche Wertigkeit der vorgeschlagenen Lösung weiter erhöhen.

In einer ersten bevorzugten Ausführung, die grundsätzlich in Zusammenarbeit mit Netzbetreibern realisiert werden kann, kann als erste Rufnummer-Datenbasis mindestens ein Home Location Register bzw. ein Visitor Location Register eines zellularen Mobilfunknetzes genutzt werden. Bei dieser Variante startet also das Verfahren bei einer bereits verifizierten Menge von Nutzer-Rufnummern. Alternativ hierzu - und ohne Inanspruchnahme der Informationsbasis eines Netzbetreibers - kann das Verfahren auch aufgrund willkürlich synthetisierter Rufnummern starten bzw. es können vorbestimmte Rufnummernbereiche "abgerastert" werden.

Für die Anwendung mit einem Mobilfunknetz kann eine Information bezüglich des Aufenthaltsortes des Nutzers über die Position seines Endgerätes aus dessen Zuordnung zum Visitor Location Register einer speziellen Mobilvermittlungsstelle oder auch aus dem Verbindungsstatus zu einer speziellen Basisstation des Netzes gewonnen werden. Die dynamische Zellenstruktur von Mobilfunknetzen erlaubt bekanntlich die Lokalisierung eines bestimmten Nutzers. Auch hier ist eine entsprechende Verfahrensdurchführung aber nur in Zusammenarbeit mit dem Netzbetreiber möglich, der über die entsprechenden Informationen verfügt und hinsichtlich ihrer Verwendung sowohl gesetzlichen als auch im Systemstandard verankerten Regeln unterworfen ist. Bei Anwendung des Verfahrens in einem öffentlichen Festnetz ist eine Ortsinformation aufgrund des geografischen Bezuges der Teilnehmerrufnummern vergleichsweise leicht herstellbar.

Die im Rahmen des Verfahrens ausgetauschten Nachrichten können als Sprach- oder Textnachricht - letztere gemäß den zugelassenen Standards, beispielsweise in den GSM-Mobilfunknetzen SMS (Short Message Service) und WAP (Wireless Application Protocol) - übermittelt werden. Die Wahl des konkreten Formats wird von der Art des angebotenen Dienstes und der Zielgruppe, aber auch von der weiteren technischen Entwicklung hinsichtlich der Übertragung und Anzeige von Textnachrichten abhängen.

Bei einer mehr als zwei Stufen umfassenden Ausführung des Verfahrens enthalten insbesondere - neben den Primärnachrichten - auch die Sekundärnachrichten Reaktionsaufforderungen, und beim Dienstserver sind Mittel zur Auswertung der entsprechenden Reaktions-Nachricht und zur Speicherung der Auswertungsergebnisse vorgesehen.

In einer bevorzugten Ausprägung des Verfahrens ist der angebotene Unterhaltungs-Dienst ein Spiel oder Quiz oder ein Dienst zur Anbahnung von Beziehungen zwischen einzelnen Nutzern des Telekommunikationssystems (Formierung von Interessengruppen, Bekanntschaftsanbahnung etc.). Hierbei wird mit der Primärnachricht eine Basisinformation gegeben und die Bereitschaft des angesprochenen Nutzers zur Beteiligung angefragt. Schon mit der ersten Reaktions-Nachricht erhält der Dienstbetreiber eine wertige Information, die zumindest in der Verifizierung einer vorher willkürlich generierten Rufnummer und/oder einer Information über den Aufenthaltsort des Interessenten sowie in der Tatsache besteht, daß dieser für das vorbestimmte Angebot Interesse hat. Im weiteren werden mit einer oder mehreren Sekundärnachrichten Spielregel- bzw. Spielablaufinformationen gegeben und - bei geeigneter inhaltlicher Strukturierung des Spiels bzw. Wissenswettbewerbes oder der Kriterien für die Anbahnung persönlicher Beziehungen - aus den empfangenen Reaktions-Nachrichten weitere Informationen abgeleitet und in der Auswertungsergebnis-Datenbasis gespeichert.

In einer zweckmäßigen Ausprägung des Verfahrens entstehen hierbei individuelle Nutzerprofile, die einerseits bei einem die Herstellung persönlicher Beziehungen bezweckenden Dienst zur Implementierung dieses Dienstes genutzt werden und andererseits eine für kommerzielle Kunden des Dienstanbieters wertvolle Information darstellen.

In einer besonders vorteilhaften Verfahrensführung wird über die Auswertungsergebnis-Datenbasis eine Filterung der Sekundärnachrichten in Abhängigkeit von mit den Reaktions-Nachrichten empfangenen Informationen ausgeführt. Der Ablauf des Spiels bzw. Wettbewerbes oder der Beziehungs-Anbahnung wird hierdurch vom jeweiligen aktuellen Informationsstand abhängig gemacht.

In einer weiteren bevorzugten Ausgestaltung werden die Sekundärnachrichten - mindestens in einem Teil der Verfahrensstufen - unter Nutzung von Speicherinhalten der Auswertungsergebnis-Datenbasis erstellt. Dabei ist auch die Herstellung von Querverbindungen zwischen einzelnen Speicherbereichen möglich in der Art, daß beispielsweise - natürlich nach Vorliegen einer entsprechenden Einverständniserklärung des Betroffenen - Rufnummern fremder Teilnehmer des Telekommunikationssystems an einen Spielteilnehmer gegeben werden. Auf dieser Basis lassen sich auch Partner-Spiele organisieren, die unter organisatorischer Leitung und Resultatsüberwachung des Dienstanbieters ablaufen, der schließlich auch die Ermittlung von Plazierungen und die Zuordnung von Gewinnprämien vornimmt.

Eine Anordnung zur Durchführung des vorgeschlagenen Verfahrens zeichnet sich insbesondere durch das Vorhandensein einer ersten und einer zweiten Rufnummern-Datenbasis sowie einer Auswertungsergebnis-Datenbasis aus, wobei die zweite Rufnummern-Datenbasis und die Auswertungsergebnis-Datenbasis die im Rahmen des Verfahrensablaufes gewonnenen nutzerbezogenen Informationen akkumulieren. Ein Primär- und ein Sekundärnachrichtenspeicher - von denen der letztere Sekundärnachrichten in hierarchisch geschachtelter Anordnung aufnehmen kann - stellen die systemseitige Datenbasis des Verfahrensablaufes dar, und eine im Dienstserver implementierte Ablaufsteuereinheit sowie eines oder mehrere Dienstserver-Endgeräte realisieren die Verfahrensdurchführung. Unter dem Begriff "Dienstserver-Endgerät" ist, je nach konkreter Implementierung der Anordnung, ein Telekommunikations-Endgerät oder auch ein Datenkommunikations-Endgerät oder eine Datenkommunikations-Schnittstelle zu verstehen.

In einer zur besonders rationellen Verfahrensdurchführung ausgebildeten Anordnung sind eine Primärnachrichten-Syntheseeinheit und/oder eine Sekundärnachrichten-Syntheseeinheit zur automatischen oder halbautomatischen Sprach- und Textsynthese der Nachrichten aufgrund einprogrammierter oder aus einer Datenbasis ausgelesener Basisinformationen vorgesehen. Es versteht sich, daß die Verfahrensdurchführung auch im organisatorischen Rahmen eines Call Center möglich ist, wobei die Agenten jeweils auf in den Nachrichtenspeichern sowie den Rufnummern-Datenbasen gespeicherte Informationen zurückgreifen.

Je nach konkreter Ausgestaltung des Verfahrens zählt zu den relevanten Datenbasen auch eine Spielregel-Datenbasis oder eine Wissensbasis für einen Wissenswettbewerb o. ä. Oben wurde bereits darauf hingewiesen, daß auch die Auswertungsergebnis-Datenbasis und die zweite Rufnummern-Datenbasis in einer zweckmäßigen Ausgestaltung des Verfahrens mit der Sekundärnachrichten-Syntheseeinheit verbunden oder für einen Agenten des Call Center bei der persönlichen Abwicklung des Verfahrensablaufes zugreifbar sein werden.

Zur effizienten Verfahrensdurchführung bietet sich eine mindestens phasenweise parallele Aussendung einer Mehrzahl von Nachrichten, insbesondere mittels des Cell Broadcast-Verfahrens, an. Auf dieser Basis lassen sich auch vorteilhaft Spiele durchführen, bei denen es auf die Reaktionsschnelligkeit der Teilnehmer oder insgesamt auf einen möglichst schnellen Abschluß ankommt.

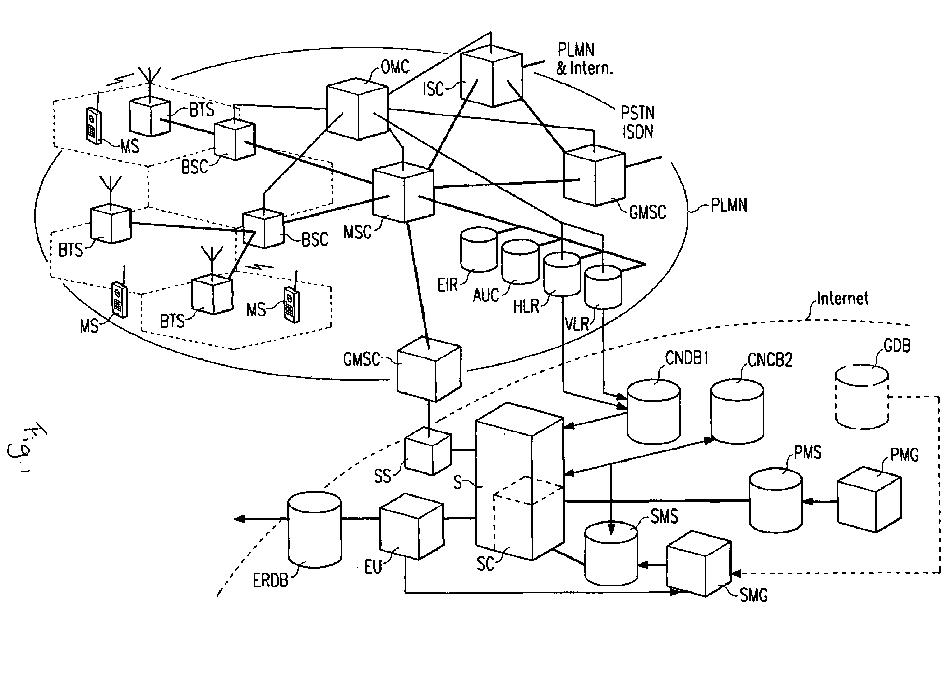

Vorteile und Zweckmäßigkeiten der Erfindung ergeben sich im übrigen aus den Unteransprüchen sowie der nachfolgenden Beschreibung eines bevorzugten Ausführungsbeispiels der Erfindung anhand der Figur. Die Figur zeigt in schematischer Darstellung eine Anordnung zur Verfahrensdurchführung über das Internet und ein mit diesem verknüpftes GSM-Mobilfunknetz PLMN.

Der Aufbau des Mobilfunknetzes PLMN ist an sich bekannt und bedarf hier keiner detaillierten Erläuterung. Mobilstationen (Mobiltelefone) MS sind im Rahmen einer dynamischen Zellstruktur jeweils über eine Basisstation BTS/BSC mit einer Mobilvermittlungsstelle MSC verbunden. Der Mobilvermittlungsstelle MSC ist eine Mehrzahl von Datenbasen zugeordnet, von denen in der Figur das Geräte-Identifizierungsregister EIR, das Authentisierungszentrum AUC, das Home Location Register (Heimatdatei) HLR und das Visitor Location Register (Besucherdatei) skizziert sind.

Die Mobilvermittlungsstelle MSC steht über eine internationale Vermittlungsstelle ISC mit anderen Mobilfunknetzen PLMN - auch im internationalen Maßstab - in Verbindung. Weiter steht die Mobilvermittlungsstelle MSC über eine erste Gateway-Mobilvermittlungsstelle GMSC mit dem öffentlichen Festnetz PSTN bzw. einem ISDN-Telefonnetz ISDN in Verbindung und über eine zweite Gateway-Mobilvermittlungsstelle GMSC mit dem nachfolgend genauer beschriebenen System des Anbieters eines Dienstes im Rahmen der vorliegenden Erfindung.

Der Dienstanbieter betreibt einen Dienstserver S, der über ein Dienstserver-Endgerät SS - beispielsweise eine Datenschnittstelle geeigneter Kapazität - mit der Gateway-Mobilvermittlungsstelle GMSC des Mobilfunknetzes PLMN verbunden ist. Der Dienst-Server S umfaßt eine Ablaufsteuereinheit (Controller) SC, über den die Verfahrensdurchführung abgewickelt wird.

Dem Dienstserver S ist eine erste Rufnummern-Datenbasis CNDB1 zugeordnet, die ihren Datenvorrat aus dem Home Location Register und dem Visitor Location Register der Mobilvermittlungsstelle MSC bezieht. Weiter ist dem Dienstserver S eine zweite Rufnummern-Datenbasis CNDB2 zugeordnet, deren Datenbestand im Verlaufe der Verfahrensdurchführung aufgebaut wird. In einem Primärnachrichtenspeicher PMS sind eine Primärnachricht bzw. ein Primärnachrichtensatz gespeichert, die bzw. der aufgrund inhaltlicher Vorgaben in einer Primärnachrichten-Syntheseeinheit PMG generiert wurde(n). Weiter ist dem Dienstserver S ein Sekundärnachrichtenspeicher SMS zugeordnet, in dem in einzeln adressierbaren Speicherbereichen eine Mehrzahl von Sekundärnachrichten gespeichert ist, die in einer Sekundärnachrichten-Syntheseeinheit SMG erzeugt wurden. Bei einer speziellen Ausführung, bei der die Verfahrensdurchführung einen Spielablauf beinhaltet, fließt in die Erstellung der Sekundärnachrichten durch die Sekundärnachrichten-Syntheseeinheit ein Spielregel-Datenbestand einer Spielregel-Datenbasis GDB ein, die (zur Kennzeichnung ihres optionalen Vorsehens) gestrichelt dargestellt ist.

Ausgangsseitig ist dem Dienstserver S eine Auswertungseinheit EU zur Auswertung von über das Dienstserver-Endgerät SS empfangenen Reaktions-Nachrichten zugeordnet, dessen Ausgang mit einer Auswertungsergebnis-Datenbasis ERDB verbunden ist. Diese ist - was durch einen nach außen weisenden Pfeil symbolisiert ist - gemäß bestimmte mit dem Dienstanbieter festgelegten Regeln von außen zugreifbar. Die Auswertungseinheit EU ist im übrigen auch mit einem Eingang der Sekundärnachrichten-Syntheseeinheit SMG verbunden, so dass Auswertungsergebnisse in die Synthese von Sekundärnachrichten einflie-ßen können.

Die Funktionsweise der gezeigten Anordnung ergibt sich aus den obigen allgemeinen Ausführungen zum Verfahrensablauf.

### Bezugszeichenliste

- AUC (Authentication Center): Authentisierungseinrichtung
- BTS (Base Transceiving Station)/ BSC (Base Station Controller): Basisstation
- CNDB1: erste Rufnummern-Datenbasis
- CNDB2: zweite Rufnummern-Datenbasis
- EIR (Equipment Identity Register): Geräte-Identifizierungsregister
- ERDB: Auswertungsergebnis-Datenbasis
- EU: Auswertungseinheit
- GDB: Spielregel-Datenbasis
- GMSC (Gateway MSC): Gateway-Vermittlungsstelle
- HLR (Home Location Register): Heimatdatei
- ISC (International Switching Center): internationale Vermittlungsstelle
- ISDN: ISDN-Telefonnetz
- MS: Mobilstation
- MSC (Mobile Switching Center): Mobilvermittlungsstelle
- OMC (Operation and Maintenance Center): Betriebs- und Wartungszentrum
- PLMN (Public Lord Mobile Network): Mobilfunknetz
- PMG: PrimärnachrichtenSyntheseeinheit
- PMS: Primärnachrichtenspeicher
- PSTN (Public Switched Telephone Network): Festnetz
- S: Dienstserver
- SC: Dienstserver-Ablaufsteuerung
- SMG: Sekundärnachrichten-Syntheseeinheit
- SMS: Sekundärnachrichtenspeicher
- SS: Dienstserver-Endgerät
- VLR (Visitor Location Register): Besucherdatei

## Patentansprüche

1. Verfahren zum Betrieb eines Telekommunikationssystems, welches insbesondere ein Mobilfunknetz (PLMN) einschließt, zur Bereitstellung einer Dienstleistung und zur Informationsgewinnung, mit den Schritten:
- Speicherung einer Mehrzahl von Endgeräte-Rufnummern des Telekommunikationssystems in einer ersten Rufnummern-Datenbasis (CNDB1),
- Erzeugung einer Primärnachricht, die mindestens einen Informationsteil, eine in Anpassung an einen Auswertungsalgorithmus normierte Reaktionsaufforderung und eine Rufnummer eines Dienstserver-Endgerätes umfasst, und Speicherung in,einem Primärnachrichtenspeicher (PMS) eines Dienstservers (S),
- Erstellung einer Mehrzahl von Sekundärnachrichten, deren Inhalt eine Abhängigkeit von (a) mindestens einem Informationselement einer im Ansprechen auf die Primärnachricht erstellten Reaktions-Nachricht und/oder (b) einer Endgerät-Rufnummer des Telekommunikationssystems und/oder (c) der geografischen Position eines auf die Primärnachricht reagierenden Endgerätes aufweist und Speichern in einem Sekundärnachrichtenspeicher (SMS),
- sequentielle oder parallele Absendung der gespeicherten Primärnachricht an die in der ersten Rufnummern-Datenbasis gespeicherten Rufnummern durch ein Dienstserver-Endgerät (SS),
- Empfang von Reaktions-Nachrichten durch das Dienstserver-Endgerät (SS) unter Registrierung der Absender-Rufnummer und/oder der geografischen Position des Absender-Endgerätes (MS),
- Auswertung jeder empfangenen Nachricht nach dem Auswertungsalgorithmus zur Gewinnung eines individuellen Nutzerprofils des Nutzers des Absender-Endgeräte,
- Speichern der Absender-Rufnummer in einem Speicherbereich einer zweiten Rufnummern-Datenbasis (CNDB2),
- Speichern des Auswertungsergebnisses und/oder der geografischen Position in Zuordnung zur Absender-Rufnummer in einer Auswertungsergebnis-Datenbasis (ERDB),
- Adressierung eines Speicherbereiches des Sekundärnachrichtenspeichers (SMS) in Abhängigkeit vom Auswertungsergebnis und Auslesen der gespeicherten Sekundärnachricht sowie des zugehörigen Speicherbereiches der zweiten Rufnummern-Datenbasis (CNDB2) an das Dienstserver-Endgerät (SS) und
- Absendung der ausgelesenen Sekundärnachricht an das betreffende Nutzer-Endgerät (MS).

2. Verfahren nach Anspruch 1,
**dadurch gekennzeichnet, daß**
als erste Rufnummern-Datenbasis (CNDB1) mindestens ein Home Location Register (HLR) und/oder mindestens ein Visitor Location Register (VLR) eines zellularen Mobilfunknetzes oder eine hiermit verbundene Datenbasis beim Dienstserver genutzt wird.

3. Verfahren nach Anspruch 1,
**dadurch gekennzeichnet, daß**
die erste Rufnummern-Datenbasis (CNDB1) willkürlich vorgegebene, insbesondere mittels eines Zufallsgenerators erzeugte, Rufnummern umfaßt.

4. Verfahren nach einem der vorangehenden Ansprüche,
**dadurch gekennzeichnet, daß**
eine approximierte geografische Position des Absender-Endgerätes (MS) aus dessen Zuordnung zum Visitor Location Register (VLR) einer speziellen Mobilvermittlungsstelle (MSC) oder aus dessen Verbindungsstatus zu einer speziellen Basisstation (BTS/BSC) eines zellularen Mobilfunknetzes (PLMN) ermittelt wird.

5. Verfahren nach einem der vorangehenden Ansprüche,
**dadurch gekennzeichnet, daß**
der Informationsteil der Primärnachricht eine Spielregelinformation und/oder mindestens eine Frage und die Reaktionsaufforderung eine Sprach- oder Texteingabeaufforderung umfaßt.

6. Verfahren nach einem der vorangehenden Ansprüche,
**dadurch gekennzeichnet, daß**
die Primärnachricht und/oder die Sekundärnachrichten als, insbesondere synthetische, Sprachnachricht oder Textnachricht im SMS- oder WML-Format zur Ausgabe über die Hörkapsel bzw. das Display eines Mobiltelefons (MS) ausgebildet sind.

7. Verfahren nach einem der vorangehenden Ansprüche,
**dadurch gekennzeichnet, daß**
die Sekundärnachrichten Reaktionsaufforderungen umfassen und die Schritte des Empfangs und der Auswertung von Reaktions-Nachrichten sowie des Speicherns des Auswertungsergebnisses nach der Absendung der Sekundärnachrichten, insbesondere mehrfach unter zwischengeschalteter Absendung von Folgenachrichten, wiederholt werden.

8. Verfahren nach Anspruch 7,
**dadurch gekennzeichnet, daß**
mindestens ein Teil der nacheinander abgesandten Sekundärnachrichten Spielverlaufsinformationen und/oder Fragen und mindestens ein Teil der verschiedenen Reaktions-Nachrichten Spielzuginformationen und/oder Antworten umfaßt.

9. Verfahren nach einem der vorangehenden Ansprüche,
**dadurch gekennzeichnet, daß**
über die Auswertungsergebnis-Datenbasis (ERDB) eine dem Sekundärnachrichtenspeicher (SMS) zugeordnete Filtereinrichtung zur Ausfilterung von Sekundärnachrichten in Abhängigkeit von mit den Reaktions-Nachrichten empfangenen Informationen gesteuert wird.

10. Verfahren nach einem der vorangehenden Ansprüche,
**dadurch gekennzeichnet, daß**
aus Speicherinhalten der Auswertungsergebnis-Datenbasis (ERDB) Sekundärnachrichten erstellt werden.

11. Verfahren nach Anspruch 10,
**dadurch gekennzeichnet, daß**
in Abhängigkeit vom Auswertungsergebnis einer Mehrzahl von Reaktions-Nachrichten mindestens eine fremde Endgeräte-Rufnummer und/oder ein einen fremden Nutzer des Telekommunikationssystem betreffendes Auswertungsergebnis in Sekundärnachrichten integriert wird.

12. Verfahren nach einem der vorangehenden Ansprüche,
**dadurch gekennzeichnet, daß**
in Abhängigkeit vom Auswertungsergebnis einer Mehrzahl von Reaktions-Nachrichten identische Sekundärnachrichten an eine Mehrzahl verschiedener Endgeräte-Rufnummern aus der zweiten Rufnummern-Datenbasis gesandt werden.

13. Anordnung eingerichtet zur Durchführung des Verfahrens nach einem der vorangegangenen Ansprüche, welche aufweist:
- einen Dienstserver (S) mit einer Ablaufsteuereinheit (SC) und mindestens einem Dienstserver-Endgerät (SS),
- eine erste und eine zweite Rufnummer-Datenbasis (CNDB1, DNDB2),
- einen Primär- und einen Sekundärnachrichtenspeicher (PMS, SMS),
- eine Auswertungseinheit (EU) zur Auswertung empfangener Reaktions-Nachrichten und
- eine mit der Auswertungseinheit verbundene Auswertungsergebnis-Datenbasis (ERDB) zum Speichern des individuellen Nutzerprofils.

14. Anordnung nach Anspruch 13,
**dadurch gekennzeichnet, daß**
zur automatischen sequentiellen oder parallelen Absendung von Primär- und/oder Sekundärnachrichten die erste und/oder zweite Rufnummern-Datenbasis (CNDB1, CNDB2) mit einem Steuereingang des Dienstserver-Endgerätes (SS) oder der Dienstserver-Endgeräte verbunden ist.

15. Anordnung nach Anspruch 13 oder 14,
**dadurch gekennzeichnet, daß**
zur automatischen Auswertung der Reaktions-Nachrichten die Auswertungseinheit (EU) mit einem Datenausgang des oder jedes Dienstserver-Endgerätes (SS) verbunden ist.

16. Anordnung nach einem der Ansprüche 13 bis 15, **gekennzeichnet durch**
eine Primärnachrichten-Syntheseeinheit (PMG) und/oder eine Sekundärnachrichten-Syntheseeinheit (SMG) zur computergestützten Erzeugung von Primär- und/oder Sekundärnachrichten, insbesondere ausgebildet als Sprachsyntheseeinheit oder nach dem SMS- oder WML-Standard arbeitende Textsyntheseeinheit.

17. Anordnung nach einem der Ansprüche 13 bis 16,
**dadurch gekennzeichnet, daß**
das Telekommunikationssystem als Mobilfunksystem (PLMN) ausgebildet ist oder ein mit einem Mobilfunknetz über eine Gateway-Mobilvermittlungsstelle (GMSC) verknüpftes IP-Netz aufweist.

18. Anordnung nach Anspruch 17,
**dadurch gekennzeichnet, daß**
die erste Rufnummern-Datenbasis mindestens ein Home Location Register (HLR) und/oder mindestens ein Visitor Location Register (VLR) des Mobilfunknetzes umfaßt oder mit einem solchen verbunden ist.

19. Anordnung nach einem der Ansprüche 13 bis 17,
**dadurch gekennzeichnet, daß**
mit einem Eingang der ersten Rufnummern-Datenbasis (CNDB1) ein Zufallsgenerator verbunden ist.

20. Anordnung nach einem der Ansprüche 16 bis 19,
**dadurch gekennzeichnet, daß**
ein Eingang der Primärnachrichten-Syntheseeinheit (PMG) bzw. Sekundärnachrichten-Syntheseeinheit (SMG) mit einer Spielregel-Datenbasis (GDB) verbunden ist.

21. Anordnung nach einem der Ansprüche 13 bis 20,
**dadurch gekennzeichnet, daß**
die Auswertungsergebnis-Datenbasis (ERDB) mit einem Steuereingang einer dem Sekundärnachrichtenspeicher (SMS) zugeordneten Filtereinrichtung verbunden ist.

22. Anordnung nach einem der Ansprüche 16 bis 21,
**dadurch gekennzeichnet, daß**
die Sekundärnachrichten-Syntheseeinheit (SMG) eingangsseitig mit einem Ausgang der Auswertungseinheit (EU) oder der Auswertungsergebnis-Datenbasis (ERDB) verbunden ist.

23. Anordnung nach einem der Ansprüche 16 bis 22,
**dadurch gekennzeichnet, daß**
die Sekundärnachrichten-Syntheseeinheit (SMG) eingangsseitig mit der zweiten Rufnummern-Datenbasis (CNDB2) verbunden ist.

24. Anordnung nach einem der Ansprüche 13 bis 23,
**dadurch gekennzeichnet, daß**
die Ablaufsteuereinheit (SC) und das Dienstserver-Engerät (SS) bzw. die Dienstserver-Endgeräte zur parallelen Aussendung einer Mehrzahl von Primärnachrichten und/oder Sekundärnachrichten, insbesondere im Cell Broadcast-Verfahren ausgebildet sind.

## Claims

1. Method of operating a telecommunication system that in particular includes a mobile wireless network (PLMN), in order to provide a service and to obtain information, with the steps:
- storage of a plurality of terminal-device call numbers of subscribers to the telecommunication system, in a first call-number database (CNDB1),
- generation of a primary message, which comprises at least one information component, one response request standardised in accordance with an evaluation algorithm, and one call number of a server terminal, as well as storage in a primary-message store (PMS) of a server (S),
- preparation of a plurality of secondary messages, the content of which is dependent on (a) at least one information element of a response message produced in reaction to the primary message and/or (b) a terminal-device call number of the telecommunication system and/or (c) the geographical position of a terminal device that is responding to the primary message, and storage in a secondary-message store (SMS),
- sequential or parallel transmission of the stored primary message to the call numbers stored in the first call-number database, by way of a server terminal device (SS),
- receipt of response messages by the server's terminal (SS), during which the sender call number and/or the geographical position of the sender's terminal (MS) are registered,
- evaluation of each received message according to the evaluation algorithm, in order to obtain an individual user profile for the user of the sender's terminal,
- storage of the sender call number in a storage region of a second call-number database (CNDB2),
- storage of the result of the evaluation and/or the geographical position in relation to the sender's call number, in an evaluation-result database (ERDB),
- addressing a storage region of the secondary-message store in dependence on the evaluation result, and reading out the stored secondary message as well as the associated storage region in the second call-number database (CNDB2) to the server terminal (SS) and
- sending the read-out secondary message to the relevant user terminal device (MS).

2. Method according to Claim 1,
**characterized in that** as the first call-number database (CNDB1) at least one home location register (HLR) and/or at least one visitor location register (VLR) of a cellular mobile wireless network or a database at the server that is connected thereto is used.

3. Method according to Claim 1,
**characterized in that** the first call-number database (CNDB1) comprises call numbers that are arbitrarily predetermined, in particular are produced by means of a random-variable generator.

4. Method according to one of the preceding claims,
**characterized in that** an approximate geographic position of the sender's terminal (MS) is found from the terminal's place in the visitor location register (VLR) of a special mobile switching centre (MSC), or from the status of its connection to a special base station (BTS/BSC) of a cellular mobile wireless network (PLMN).

5. Method according to one of the preceding claims,
**characterized in that** the information component of the primary message comprises information about rules of a game and/or at least one question, and the response request comprises a request for speech or text input.

6. Method according to one of the preceding claims,
**characterized in that** the primary message and/or the secondary messages are formulated as in particular synthetic speech or text messages in SMS or WML format for output by way of the receiver cap or the display, respectively, of a mobile telephone (MS).

7. Method according to one of the preceding claims,
**characterized in that** the secondary messages comprise response requests, and the steps involved in reception and evaluation of response messages as well as in storing the evaluation result are repeated after the secondary messages have been sent, in particular on multiple occasions separated by the sending of follow-up messages.

8. Method according to Claim 7,
**characterized in that** at least some of the sequentially transmitted secondary messages contain information regarding the progress of the game and/or questions, and at least some of the various response messages contain information regarding the moves to be made in the game and/or answers.

9. Method according to one of the preceding claims,
**characterized in that** by way of the evaluation-result database (ERDB) a filter device associated with the secondary-message store (SMS) is controlled in such a way as to filter out secondary messages in dependence on information received with the response messages.

10. Method according to one of the preceding claims,
**characterized in that** secondary messages are produced from the contents of the memory in the evaluation-result database (ERDB).

11. Method according to Claim 10,
**characterized in that** depending on the result obtained by evaluating a plurality of response messages, at least one unfamiliar terminal-device call number and/or an evaluation result concerning an unfamiliar user of the telecommunication system is integrated into secondary messages.

12. Method according to one of the preceding claims,
**characterized in that** depending on the result obtained by evaluating a plurality of response messages, identical secondary messages are sent to a plurality of different terminal call numbers from the second call-number database.

13. Arrangement designed for implementing the method according to one of the preceding claims, which comprises:
- a server (S) with a control unit (SC) and at least one server terminal (SS),
- a first and a second call-number database (CNDB1, CNDB2),
- a primary-message and a secondary-message store (PMS, SMS),
- an evaluation unit (EU) to evaluate response messages that are received and
- an evaluation-result database (ERDB) connected to the evaluation unit, for storing the individual user profile.

14. Arrangement according to Claim 13,
**characterized in that** for the automatic sequential or parallel transmission of primary and/or secondary messages the first and/or second call-number database (CNDB1, CNDB2) is connected to a control input of the server terminal (SS) or server terminals.

15. Arrangement according to Claim 13 or 14,
**characterized in that** for the automatic evaluation of the response messages the evaluation unit (EU) is connected to a data output of the or each server terminal (SS).

16. Arrangement according to one of the claims 13 to 15,
**characterized by** a primary-message synthesis unit (PMG) and/or a secondary-message synthesis unit (SMG) for the computer-assisted generation of primary and/or secondary messages, in particular constructed as a speech-synthesis unit or a text-synthesis unit operating according to the SMS or WML standard.

17. Arrangement according to one of the claims 13 to 16,
**characterized in that** the telecommunications system is designed as a mobile wireless system (PLMN) or comprises an IP network linked to a mobile wireless network by way of a gateway mobile switching centre (GMSC).

18. Arrangement according to Claim 17,
**characterized in that** the first call-number database comprises at least one home location register (HLR) and/or at least one visitor location register (VLR) of the mobile network or is connected thereto.

19. Arrangement according to one of the claims 13 to 17,
**characterized in that** to one input of the first call-number database (CNDB1) a random-variable generator is connected.

20. Arrangement according to one of the claims 16 to 19,
**characterized in that** one input of the primary-message synthesis unit (PMG) or the secondary-message synthesis unit (SMG) is connected to a game-rule database (GDB).

21. Arrangement according to one of the claims 13 to 20,
**characterized in that** the evaluation-result database (ERDB) is connected to a control input of a filter device associated with the secondary-message store (SMS).

22. Arrangement according to one of the claims 16 to 21,
**characterized in that** the secondary-message synthesis unit (SMG) is connected on its input side to the output of the evaluation unit (EU) or of the evaluation-result database (ERDB).

23. Arrangement according to one of the claims 16 to 22,
**characterized in that** the secondary-message synthesis unit (SMG) is connected on its input side to the second call-number database (CNDB2).

24. Arrangement according to one of the claims 13 to 23,
**characterized in that** the service controller (SC) and the server terminal (SS) or server terminals are designed for transmitting in parallel a plurality of primary messages and/or secondary messages, in particular by the cell broadcast method.

## Revendications

1. Procédé pour exploiter un système de télécommunication, qui inclut en particulier un réseau de téléphonie mobile (PLMN), pour mettre à disposition une prestation de service et obtenir de l'information, comprenant les étapes suivantes :
- stockage d'une pluralité de numéros d'appel de terminaux du système de télécommunication dans une première base de données de numéros d'appel (CNDB1),
- génération d'un message primaire, qui comprend au moins une partie d'information, une demande de réaction normalisée par adaptation à un algorithme d'analyse et un numéro d'appel d'un terminal de serveur de service, et stockage dans une mémoire de messages primaires (PMS) d'un serveur de service (S),
- établissement d'une pluralité de messages secondaires, dont le contenu présente une dépendance vis-à-vis de (a) au moins un élément d'information d'un message de réaction établi dans la réponse au message primaire et/ou (b) d'un numéro d'appel de terminal du système de télécommunication et/ou (c) de la position géographique d'un terminal réagissant au message primaire et stockage dans une mémoire de messages secondaires (SMS),
- envoi séquentiel ou parallèle du message primaire stocké aux numéros d'appel mémorisés dans la première base de données de numéros d'appel par un terminal de serveur de service (SS),
- réception de messages de réaction par le terminal du serveur de service (SS) avec enregistrement du numéro d'appel de l'expéditeur et/ou la position géographique du terminal de l'expéditeur (MS),
- analyse de chaque message reçu selon l'algorithme d'analyse pour l'obtention d'un profil d'utilisateur individuel de l'utilisateur du terminal de l'expéditeur,
- stockage du numéro d'appel de l'expéditeur dans une zone de stockage d'une seconde base de données de numéros d'appel (CNDB2),
- stockage du résultat de l'analyse et/ou de la position géographique avec attribution au numéro d'appel de l'expéditeur dans une base de données des résultats d'analyse (ERDB),
- adressage d'une zone de stockage de la mémoire de messages secondaires (SMS) en fonction du résultat de l'analyse et extraction du message secondaire stocké et de la zone de mémoire concernée de la seconde base de données de numéros d'appel (CNDB2) à destination du terminal du serveur de service (SS) et
- envoi du message secondaire extrait au terminal d'utilisateur concerné (MS).

2. Procédé selon la revendication 1,
**caractérisé en ce que**
comme première base de données de numéros d'appel (CNDB1), on utilise au moins un enregistreur de localisation nominale (HLR) et/ou au moins un enregistreur de localisation visité (VLR) d'un réseau de téléphonie mobile cellulaire ou une base de données reliée de cette façon auprès du serveur de service.

3. Procédé selon la revendication 1,
**caractérisé en ce que**
la première base de données de numéros d'appel (CNDB1) comprend des numéros d'appel volontairement prédéfinis et générés en particulier au moyen d'un générateur de nombres aléatoires.

4. Procédé selon l'une quelconque des revendications précédentes,
**caractérisé en ce que**
une position géographique approchée du terminal de l'expéditeur (MS) est déterminée à partir de son attribution à l'enregistreur de localisation visité (VLR) d'un centre de commutation du service mobile (MSC) spécial ou à partir de son état de liaison à une station de base (BTS/BSC) spéciale d'un réseau de téléphonie mobile cellulaire (PLMN).

5. Procédé selon l'une quelconque des revendications précédentes,
**caractérisé en ce que**
la partie d'information de message primaire comprend une information sur la règle du jeu et/ou au moins une question et la demande de réaction comprend une demande d'entrée vocale ou d'entrée de texte.

6. Procédé selon l'une quelconque des revendications précédentes,
**caractérisé en ce que**
le message primaire et/ou les messages secondaires sont conçus comme un message vocal, en particulier synthétique, ou un message de texte dans le format SMS ou WML pour la sortie au moyen du récepteur ou de l'écran d'un téléphone mobile (MS).

7. Procédé selon l'une quelconque des revendications précédentes,
**caractérisé en ce que**
les messages secondaires comprennent des demandes de réaction et les étapes de la réception et de l'analyse de messages de réaction ainsi que du stockage des résultats d'analyse sont répétées après l'envoi des messages secondaires, en particulier plusieurs fois avec un envoi intercalé de messages consécutifs.

8. Procédé selon la revendication 7,
**caractérisé en ce que**
au moins une partie des messages secondaires envoyés successivement comprend des informations sur le déroulement du jeu et/ou des questions et au moins une partie des différents messages de réaction comprend des informations sur le cours du jeu et/ou des réponses.

9. Procédé selon l'une quelconque des revendications précédentes,
**caractérisé en ce que**
par la base de données des résultats de l'analyse (ERDB), on commande un dispositif de filtrage attribué à la mémoire de messages secondaires (SMS) pour le filtrage de messages secondaires en fonction d'informations reçues avec les messages de réaction.

10. Procédé selon l'une quelconque des revendications précédentes,
**caractérisé en ce que**
des messages secondaires sont établis à partir de contenus de mémoire de la base de données des résultats d'analyse (ERDB).

11. Procédé selon la revendication 10,
**caractérisé en ce que**
en fonction du résultat d'analyse d'une pluralité de messages de réaction, au moins un numéro d'appel de terminal extérieur et/ou un résultat d'analyse concernant un utilisateur extérieur du système de télécommunication est intégré dans des messages secondaires.

12. Procédé selon l'une quelconque des revendications précédentes,
**caractérisé en ce que**
en fonction du résultat de l'analyse d'une pluralité de messages de réaction, des messages secondaires identiques sont envoyés à une pluralité de différents numéros d'appel de terminaux à partir de la seconde base de données de numéros d'appel.

13. Dispositif aménagé pour mettre en oeuvre le procédé selon l'une quelconque des revendications précédentes, qui comprend :
- un serveur de service (S) avec une unité de commande séquentielle (SC) et au moins un terminal de serveur de service (SS),
- une première et une seconde bases de données de numéros d'appel (CNDB1, DNDB2),
- une mémoire de messages primaires et une mémoire de messages secondaires (PMS, SMS),
- une unité d'analyse (EU) pour l'analyse de messages de réaction reçus et
- une base de données de résultats d'analyse (ERDB) reliée à l'unité d'analyse pour le stockage du profil d'utilisateur individuel.

14. Dispositif selon la revendication 13,
**caractérisé en ce que**
pour l'envoi automatique, séquentiel ou parallèle de messages primaires et/ou de messages secondaires, la première et/ou la seconde bases de données de numéros d'appel (CNDB1, CNDB2) est reliée à une entrée de commande du terminal du serveur de service (SS) ou des terminaux du serveur de service.

15. Dispositif selon la revendication 13 ou 14,
**caractérisé en ce que**,
pour l'analyse automatique des messages de réaction, l'unité d'analyse (EU) est reliée à une sortie de données du ou de chaque terminal du serveur de service (SS).

16. Dispositif selon l'une quelconque des revendications 13 à 15,
**caractérisé par**
une unité de synthèse de messages primaires (PMG) et/ou une unité de synthèse de messages secondaires (SMG) pour la génération automatisée de messages primaires et/ou de messages secondaires, en particulier réalisée comme unité de synthèse vocale ou unité de synthèse de texte travaillant selon le standard SMS ou WML.

17. Dispositif selon l'une quelconque des revendications 1 à 16,
**caractérisé en ce que**
le système de télécommunication est conçu comme un système de téléphonie mobile (PLMN) ou présente un réseau IP associé à un réseau de téléphonie mobile par un centre de commutation du service mobile à passerelle (GMSC).

18. Dispositif selon la revendication 17,
**caractérisé en ce que**
la première base de données de numéros d'appel comprend au moins un enregistreur de localisation nominale (HLR) et/ou au moins un enregistreur de localisation visité (VLR) du réseau de téléphonie mobile ou est reliée à un tel registre.

19. Dispositif selon l'une quelconque des revendications 13 à 17,
**caractérisé en ce que**
un générateur aléatoire est relié à une entrée de la première base de données de numéros d'appel (CNDB1).

20. Dispositif selon l'une quelconque des revendications 16 à 19,
**caractérisé en ce que**
une entrée de l'unité de synthèse de messages primaires (PMG) ou de l'unité de synthèse de messages secondaires (SMG) est reliée à une base de données de règles de jeu (GDB).

21. Dispositif selon l'une quelconque des revendications 13 à 20,
**caractérisé en ce que**
la base de données de résultats d'analyse (ERDB) est reliée à une entrée de commande d'un dispositif de filtre attribué à la mémoire de messages secondaires (SMS).

22. Dispositif selon l'une quelconque des revendications 16 à 21,
**caractérisé en ce que**
l'unité de synthèse de message secondaire (SMG) est reliée côté entrée à une sortie de l'unité d'analyse (EU) ou de la base de données de résultats d'analyse (ERDB).

23. Dispositif selon l'une quelconque des revendications 16 à 22,
**caractérisé en ce que**
l'unité de synthèse de messages secondaires (SMG) est reliée côté entrée à la seconde base de données de numéros d'appel (CNDB2).

24. Dispositif selon l'une quelconque des revendications 13 à 23,
**caractérisé en ce que**
l'unité de commande séquentielle (SC) et le terminal de serveur de service (SS) ou les terminaux de serveur de service sont conçus pour l'envoi parallèle d'une pluralité de messages primaires et/ou de messages secondaires, en particulier dans le procédé « Cell Broadcast ».
